# EUROPÄISCHE PATENTSCHRIFT

(11) **EP 3 922 098 B1**
(45) Veröffentlichungstag und Bekanntmachung des Hinweises auf die Patenterteilung: **12.04.2023**
(21) Anmeldenummer: 21175684.6
(22) Anmeldetag: 25.05.2021
(51) Int. Cl.: A01K 61/54

(54) **VORRICHTUNG ZUR VERSORGUNG VON MUSCHELN IN EINER AQUAKULTUR**
DEVICE FOR FEEDING MUSSELS IN AN AQUACULTURE
DISPOSITIF POUR L'APPROVISIONNEMENT DE MOULES DANS UNE AQUACULTURE

(30) Priorität: 11.06.2020 DE 102020115538
(43) Veröffentlichungstag der Anmeldung: 15.12.2021
(73) Patentinhaber: Alfred-Wegener-Institut Helmholtz-Zentrum für Polar- und Meeresforschung, 27570 Bremerhaven (DE)
(72) Erfinder: Zapitis, Charitos, 27498 Helgoland (DE)

(56) Entgegenhaltungen:
- CN-A- 106 035 182
- KR-B1- 101 769 711

## Beschreibung

Die Erfindung bezieht sich auf eine Vorrichtung zur Versorgung von zumindest einer Muschel in einer Aquakultur mit einer Wasserströmung, wobei die Muschel zwei unter einem Öffnungswinkel öffenbare Schalenklappen aufweist und einen Einatemstrom erzeugt, mit einer Fixierungsvorrichtung und einem Versorgungsrohr für jede einzelne Muschel, wobei das Versorgungsrohr eine der Muschel zugewandte Versorgungsöffnung und eine abgewandte Anschlussöffnung, welche mit einer Versorgungseinheit zur Bereitstellung von Versorgungsmaterial verbunden ist, aufweist.

Muscheln werden frisch, gefroren oder konserviert als wertvolles Lebensmittel gehandelt, wobei zunehmend auch Muscheln aus land- oder wassergestützter Aquakultur geerntet werden. Darüber hinaus werden in der Aquakultur auch Meeres- und Süßwassermuschelarten für Naturschutzprojekte aufgezogen und reproduziert und in öffentlichen Ausstellungen präsentiert (Aquarien). Die vorliegende Erfindung befasst sich mit der Aufzucht von zweiklappigen Muscheln (wissenschaftlich *Bivalvia*). Sie bilden eine Klasse der Weichtiere und besitzen eine aus zwei kalkigen Klappen bestehende Schale. Die Schalenklappen sind über ein elastisches Schlossband (Ligament) miteinander verbunden und werden über zwei Schließmuskeln aktiv aneinander gezogen. Muscheln leben weltweit in Salzwasser (zu 80 %), Brackwasser und Süßwasser. Sie können je nach Spezies zwischen einigen Millimetern bis hin zu einem Meter und mehr groß sein. Heimische Muschelarten sind insbesondere Miesmuscheln, Austern, Venusmuscheln und Kammmuscheln, die einige Zentimeter groß sind. Die meisten Muscheln leben (in horizontaler oder vertikaler Ausrichtung) sessil am Gewässergrund. Sie sind an ihm festgewachsen oder liegen frei auf ihm, sodass sie sich im Sediment auch etwas bewegen können. Die meisten Muschelarten ernähren sich von Plankton, das sie mit ihren Kiemen aus dem über eine Atemöffnung eingesogenen Einatemstrom filtern und in einem Schleimpaket zur internen Mundöffnung befördern. Die Kiemen dienen somit sowohl der Versorgung der Muschel mit Sauerstoff ("atmen") als auch mit Nahrung ("fressen"). Um mehr Wasser (und damit auch mehr Nahrung und Sauerstoff) in ihr Inneres zu befördern, können die Muscheln ihre Schalenklappen auch öffnen, wobei sich zwischen den Schalenklappen der Öffnungswinkel ausbildet. Die geöffnete Muschel kann somit größere Wassermengen filtrieren. Die artgerechte und effiziente Versorgung von Muscheln ist eine der Hauptaufgaben in der Aquakultur.

Insbesondere während der Laichperiode müssen Muscheln mit großen Mengen Futter versorgt werden, da sie große Energiemengen in die Produktion von Gameten investieren. Dieser Prozess ist aber in der Regel in den Aquakulturen nicht optimiert. Die an die Tiere verfütterten Algen, deren Produktion ein arbeits- und kostenintensiver Prozess ist, werden im fließenden Wasser suspendiert. Dabei wird aber ein großer Teil von den Muscheln nicht genutzt, was zu einer Futterverschwendung und Wasserbelastung führt. Eine Individualisierung der Versorgung auf die einzelne Muschel ist daher vorteilhaft. Dabei umfasst der Begriff "Versorgung" sowohl die Fütterung und Pflege erwachsener Muscheln als auch die Reproduktion und Aufzucht von Muschelnachwuchs. Wenn im Folgenden von "Muschel" gesprochen wird, ist damit in der Regel eine Vielzahl von Tieren einer speziellen Spezies gemeint, wobei jedes einzelne Tier entsprechend behandelt wird. Ebenso ist bei Parameterangaben, beispielsweise der Größe, nicht die Größe eines einzelnen Individuums, sondern die durchschnittliche Größe der Spezies gemeint. Es soll aber durchaus auch die Versorgung eines einzelnen Tieres, beispielsweise einer Riesenmuschel in einem eigenen Aquarium, beispielsweise für Schauzwecke, umfasst sein.

### Stand der Technik

Der der Erfindung nächstliegende Stand der Technik ist aus der CN 106 035 182 A bekannt. Beschrieben wird eine Perlmuschelfutter- und pflegebox, die für die Aquakultur verwendet wird. Perlmuscheln weisen zwei Schalenklappen auf. Die Box besteht aus einem Kastenkörper, der oben offen und unten geschlossen ist. Eine einzelne Muschel wird schräg in die Box eingelegt, sodass die Box als Fixierungsvorrichtung für die Muschel fungiert. Jeder einzelnen Muschel ist ein teleskopartiges Versorgungsrohr zugeordnet, das an seinem einen Ende eine Kanüle mit einer Versorgungsöffnung aufweist. Diese wird durch ein Loch, das zuvor in eine der beiden Schalenklappen gebohrt worden ist, in das Muschelinnere eingeführt. Das andere Ende des Versorgungsrohrs weist eine Anschlussöffnung auf, mit der es an eine Versorgungseinrichtung angeschlossen ist. Von dieser wird Futter in die Muschel geleitet, die damit "zwangsernährt" wird. Dabei ist nicht auszuschließen, dass ein Teil des Futters ungenutzt wieder ausgeschieden wird. Das Loch in der Muschelschale kann einen Durchmesser von 6,5 mm aufweisen. Abgesehen davon, dass es verhältnismäßig aufwändig ist, jede einzelne Muschel entsprechend anzubohren, zu positionieren und an die Versorgungseinheit anzuschließen, wirkt die bekannte Vorrichtung massiv invasiv auf jede einzelne Muschel ein, was deren Wohlergehen abträglich ist.

Aus der CN 103 621 445 A ist es bekannt, Perlmuscheln mit einem Kern zur Perlenbildung zu impfen. Dazu wird die Muschel geöffnet, mit einer Vorrichtung offengehalten und mit einer Stahlkanüle der Kern in die Weichteile injiziert. Weiterhin ist es aus der JP 2012 019 746 A bekannt, eine Vielzahl von Muscheln in einer Aquakultur aufzuziehen, wobei sich die Muscheln mit ihrem Fuß selbsttätig ein einem Gittergerüst mit mehreren Etagen festsetzen. Aus der US 2018/0084765 A1 ist eine Vorrichtung zur Verhaltenserkennung von Fischen in einem Wasserbecken bekannt. Dazu wird gesteuert über eine Pipette Futter in das Wasser abgegeben und über Bewegungssensoren die Fischbewegungen detektiert. Ziel ist ein Training der Fische auf die gesteuerte Futterabgabe, um Futterverschwendung zu vermeiden. Eine ähnliche Vorrichtung ist aus der US 5 732 655 A bekannt.

Aus der KR 10 2014 078 038 A ist ein Verfahren zur landbasierten Austernaufzucht bekannt, bei dem individuelle Austern in einzelnen Tanks in einem Kreislaufsystem aufgezogen werden, in dem jeder Einzeltank einen eigenen Wasserzulauf und Wasserablauf hat. Aus der US 2018/0 317 460 A1 ist ein Verfahren zur landbasierten Austernaufzucht bekannt, bei dem jeweils bis zu 50 Austern pro Tank in einem Kreislaufsystem in einem Batch- oder einem Dropping-Verfahren gefüttert werden. Aus der US 6 357 392 B1 ist ein landbasiertes Verfahren zur Aufzucht von Perlaustern bekannt. Aus der KR 10 2017 0 122 390 A ist ein Verfahren zur Ermittlung der Schalenbewegungen von Bivalvien in Aquakulturfarmen mittels eines Sensors an einer Schalenhälfte bekannt.

### Aufgabenstellung

Ausgehend von der bekannten Vorrichtung zur Versorgung von Muscheln gemäß dem weiter oben beschriebenen nächstliegenden Stand der Technik ist die **Aufgabe** für die vorliegende Erfindung darin zu sehen, die gattungsbildende Vorrichtung so weiterzubilden, dass eine verbesserte Versorgung der Muscheln mit Versorgungsmaterialien erfolgen kann, ohne dabei die Muscheln invasiv zu beeinträchtigen. Gleichzeitig soll die Vorrichtung möglichst einfach und kostengünstig umsetzbar sein. Die Nutzung des zugeführten Versorgungsmaterials soll optimiert und die Wasserbelastung mit ungenutztem Versorgungsmaterial minimiert sein. Die **Lösung** für diese Aufgabe ist dem Hauptanspruch zu entnehmen. Vorteilhafte Modifikationen der Erfindung werden in den Unteransprüchen aufgezeigt und im Folgenden zusammen mit der Erfindung näher erläutert.

Erfindungsgemäß ist bei der gattungsgemäßen Vorrichtung zur Versorgung von lebenden Muscheln in Aquakultur vorgesehen, dass die Versorgungsöffnung des Versorgungsrohrs mit einem Abstand zwischen 5 mm und 100 mm (Anspruch 2 ursprünglich und Beschreibung Seite 6, 2. Absatz) vor der Muschel im Bereich des Einatemstroms angeordnet ist, wobei der Abstand der Versorgungsöffnung zur Muschel abhängig ist von der Größe der Muschel, der Stärke des Einatemstroms und der Wasserströmung. Dabei befinden sich keine weiteren "Mittel" (Gegenstände, Hindernisse, große Wegstrecken) zwischen der Versorgungsöffnung und der Muschel, sodass eine direkte Ausrichtung und Zuführung des Versorgungsmaterials an die Muschel gewährleistet ist. Eine möglichst nahe Anordnung der Versorgungsöffnung vor der Muschel ist vorteilhaft, wobei die Muschel selbst zwar nicht berührt wird, trotzdem aber kein oder nur sehr wenig Versorgungsmaterial zwischen der Versorgungsöffnung und der Muschel durch die Wasserströmung in der Aquakultur abgedrängt werden kann. Die relative (lokale) Anordnung der Versorgungsöffnung zur Muschel bzw. der Muschel vor der Versorgungsöffnung hängt wiederum von der jeweiligen Spezies ab, d.h. an welcher Stelle der jeweiligen Muschel der Einatemstrom in das Innere gesogen wird. Bei der Erfindung wird somit eine individuelle Versorgung jeder einzelnen Muschel vorgenommen, ohne dabei invasiv auf diese einzuwirken, insbesondere wird keine Schalenklappe durchbohrt. Dadurch wird sowohl die Muschel geschont also auch der Versorgungsprozess, insbesondere die Vorbereitung zur Durchführung, vereinfacht. Damit die unmittelbare Versorgung jeder Muschel trotzdem sicher gewährleistet ist, wird die Versorgungsöffnung im Bereich ihres Einatemstroms positioniert. Weiter oben wurde bereits ausgeführt, dass sich Muscheln über ihren Einatemstrom sowohl mit Sauerstoff als auch mit Nahrung versorgen. Die mit der beanspruchten Vorrichtung in das Wasser der Aquakultur abgegeben Versorgungsstoffe gelangen also mit dem Einatemstrom auf direktem Wege in das Innere der Muschel. Der Einatemstrom wird von der Muschel in den Bereich zwischen den Schalenklappen und ihrem Gewebe eingesogen und von dort über die Kiemen gefiltert.

Durch die erfindungsgemäße Vorrichtung kann eine bedeutsame Reduzierung der benötigten Futtermittelmenge (oder anderer Produkte wie Ergänzungsstoffe oder Medikamente) bewirkt werden, die für die Konditionierung von Muschelbrut und Wachstum von Jungmuscheln notwendig ist. Gleichzeitig wird eine Reduzierung der entsprechenden Kosten erreicht. Weiterhin können die Abfallprodukte im Wasser nach der Fütterung reduziert werden, wodurch die Umweltbelastung verringert wird. Zugleich können höhere Rezirkulationsraten des Wassers erreicht werden. Dies kann die Entwicklung von Muschelbrütereien und -zuchtanlagen in wasserarmen und verschmutzungsempfindlichen Zonen ermöglichen. Durch diese gravierenden Vorteile eignet sich die mit der Erfindung beanspruchte Anlage sowohl für die Produktion von Filterfressern in Form von Muscheln und Fischlarven als auch für deren Aufzucht. Aber auch eine wissenschaftliche Anwendung ist möglich, bei der die Effizienz der Futterverwertung durch Filterfresser untersucht wird.

Der Abstand der Versorgungsöffnung von der Muschel im Bereich ihres Einatemstroms hängt von der Größe der Muschel (also der Muschelspezies, nicht der individuellen Größe, die aber innerhalb einer Spezies auch nur in begrenztem Maße variiert), der Stärke ihres Einatemstroms (was wiederum abhängig ist von der zu versorgenden Muschelspezies) und von der Wasserströmung in der Aquakultur ab. Der letztgenannte Parameter ist ein Anlagenparameter, der strömungstechnisch einfach geregelt werden kann. Dabei hängt natürlich auch die gewählte Stärke der Strömung von der Muschelspezies ab, aber auch unter anderem von der Anzahl und der Dichte der versorgenden Muscheln in einem Becken. Erfindungsgemäß kann die Versorgungsöff nung mit einem Abstand zwischen 5 mm und 100 mm vor der Muschel angeordnet sein. Er kann bevorzugt und vorteilhaft 50 oder 75 mm mm betragen. Dieser hängt von der Größe der verwendeten Muschelspezies ab, beispielsweise kann für Austern *Ostrea edulis* der Abstand unter 10 mm liegen, für Riesenmuscheln *Tridacna sp.* bei 50 mm oder oberhalb davon. Zu kleine Sorten werden eher nicht versorgt werden, da hier eine individuelle Zuordnung jeder Muschel zu einem eigenen Versorgungsrohr technisch zu aufwändig ist. Bei größeren oder riesenhaften Muscheln ist die beanspruchte Einzelversorgung besonders vorteilhaft.

Wenn jede Muschel einzeln versorgt wird, anstatt dass die zugeführten Versorgungsmaterialien im gesamten Wasservolumen suspendiert sind, werden entsprechend weniger Versorgungsmaterialien benötigt. Dabei kann es sich sowohl um Nahrung, insbesondere Algen, als auch um Zusatzstoffe, beispielsweise Nahrungsergänzungsmittel oder Medikamente, handeln. Eine Reduzierung insbesondere der benötigten Algenmengen bedeutet geringere Investitionen in die Algenproduktion, was zu finanziellen Gewinnen führt. Weiterhin wird auch die Menge der direkten (ungenutzt) und indirekten (von der Muschel ausgeschiedenen) Abfallprodukte reduziert, wodurch die damit verbundenen Umweltprobleme ebenfalls reduziert werden können. Dadurch kann in geschlossenen oder teilgeschlossenen Aquakulturanlagen eine höhere Wasserrückführungsrate erreicht werden. Saubereres Wasser benötigt auch einen geringeren Reinigungsaufwand, was sich wiederum kostengünstig auswirkt. Diese Vorteile sind für die Ansiedlung von Anlagen in Gebieten mit begrenzter oder sensibler Wasserversorgung von besonderer Bedeutung. Hier sind dann auch Durchflussanlagen möglich.

Bevorzugt und vorteilhaft ist es gemäß einer weiteren Ausgestaltung der mit der Erfindung beanspruchten Vorrichtung, wenn die Versorgungsöffnung von der Öffnung einer Pipette aus Kunststoff oder Glas gebildet ist, die in das Versorgungsrohr eingesteckt ist. Durch die Pipette wird die Versorgungsöffnung in ihrer Größe und Lage genau definiert. Außerdem kann sie leicht entnommen und gereinigt oder ausgetauscht werden.

Weiterhin kann vorteilhaft und bevorzugt das Versorgungsrohr ein Rücklaufrohr zur Versorgungseinheit aufweisen. Durch das Rücklaufrohr kann ein Kreislaufsystem über die Versorgungsquelle aufgebaut werden. Insbesondere das Futter kann in einem ständigen Umlauf gehalten werden. Bei kann es beispielsweise beleuchtet werden, sodass sich Algen als Futtermittel besonders gut entwickeln. Weiterhin ist es bevorzugt und vorteilhaft, wenn das Versorgungsrohr ein Dosierventil zwischen der Versorgungsöffnung und dem Rücklaufrohr aufweist, wobei die Dosierung in Abhängigkeit von der Größe der Muschel, vom Abstand der Versorgungsöffnung von der Muschel, vom Öffnungswinkel zwischen den Schalenklappen, von der Stärke des Einatemstroms und der Wasserströmung und/oder von der Art des Versorgungsmaterials einstellbar ist. Dabei ist die Dosierung zwischen einer maximalen Dosis und einer minimalen Dosis einstellbar. Dadurch ist sichergestellt, dass weder zuwenig noch zuviel Nahrung oder anderer Stoff zugeführt wird. Bei einer Einstellung der Dosierung in Abhängigkeit von der Art des Versorgungsmaterials kann unterschieden werden zwischen einer reinen Fütterung, einer Fütterung mit Ergänzungsstoffen und einer Fütterung mit Zusatz von Medikamenten. Jedes Versorgungsrohr weist ein Dosierventil und ein Rücklaufrohr auf. Bei einer Vielzahl von zu versorgenden Muscheln sind dann entsprechend der Anzahl von Versorgungsrohren viele Dosierventile und Rücklaufrohre vorgesehen.

Abgegeben wird das Versorgungsmaterial bevorzugt über das Dosierventil, das zwischen der Versorgungsöffnung und dem Rücklaufrohr angeordnet ist. Das Dosierventil kann in offenem oder geschlossenem Zustand arbeiten, genau wie ein Dosiersystem, das die Menge des Versorgungsmaterials kontrolliert. Ist beispielsweise das Dosierventil geöffnet, strömt das Versorgungsmaterial zur Muschel, ist es geschlossen, strömt das Versorgungsmaterial in den Vorratsbehälter zurück. Dadurch wird ein Fluss der Nahrung durch das Rücklaufrohr erzeugt, der die Nahrung in einer Schleife zirkulieren lässt, wodurch in der Aquakultur unerwünschte Effekte, wie beispielsweise Anoxie - Sauerstoffmangel im Wasser durch "Überdüngung" durch insbesondere Algen -, vermieden werden. Dabei hängen das Öffnen/schließen des Dosierventils und der eingestellten Dosis davon ab, in welchem Rhythmus der Muschel etwas zugeführt werden soll bzw. sie etwas abfordert. In einer Ausführungsform der Erfindung kann bevorzugt und vorteilhaft das Dosierventil mit einer Schalenklappe der Muschel verbindbar und in Abhängigkeit vom Öffnungswinkel der Muschel betätigbar sein. Die mechanische Verbindung mit der Schalenklappe, beispielsweise durch eine Klebung, behelligt die Muschel dabei nicht. Über ihre Ingestionsöffnung zieht die Muschel den Einatemstrom in ihr Inneres und dort durch ihre Kiemen. Diese dienen sowohl der Atmung als auch der Nahrungsfilterung aus dem Wasser. Zum Einziehen des Wassers kann sich die Muschel unter einem Öffnungswinkel öffnen. Wenn sie dies tut, betätigt sie bei der oben genannten Ausführungsform der Erfindung über ihre Klappenbewegung auch das Dosierventil und Versorgungsmaterial strömt in das Innere der Muschel ein. Die Muschel kann über diesen Zusammenhang auch entsprechend auf eine Futterabforderung konditioniert werden.

Für die genannte Ausführungsform ist eine mechanische, aber nicht invasive Verbindung mit einer Schalenklappe der Muschel erforderlich. Die Muschel betätigt direkt mit ihrer Öffnungsbewegung das Dosierventil. Bevorzugt und vorteilhaft existiert eine alternative Ausführungsform, bei der an zumindest einer Schalenklappe ein Sensor zur Detektion des Öffnungswinkels der Muschel anordenbar ist, wobei dabei vom Sensor ein Signal zur Betätigung des Dosierventils erzeugbar ist. Das Dosierventil muss nicht vollständig geschlossen werden. Es kann eine kleine Öffnung beibehalten werden, damit kleine Mengen an Futtermitteln oder anderen Stoffen ständig abgegeben werden können. Diese können von den Muscheln als chemische Signale verwendet werden, durch die sie spüren, dass Futter zur Verfügung steht. Alternativ zu einem Sensor, der an einer oder beiden Schalenklappen der Muschel be festigt ist, kann bevorzugt und vorteilhaft bei der Erfindung auch ein berührungsfreier Sensor zur Detektion des Öffnungswinkels der Muschel angeordnet sein, wobei dabei vom Sensor wiederum ein Signal zur Betätigung des Dosierventils erzeugt wird. Bei dieser Ausführungsform wird die einzelne Muschel in keiner Weise mehr behelligt. Die Vorbereitungsarbeiten zur Ernährung der Muschel werden entsprechend vereinfacht. Bevorzugt und vorteilhaft kann es sich um optische oder magnetische Sensoren handeln. Es können Sensoren zur Überwachung der Öffnung, wie z.B. Magnetsensoren (Hallsensoren), eingesetzt werden, die den Abstand zwischen den beiden Schalenklappen (entspricht dem Öffnungswinkel) messen. Als weitere Alternative kann bevorzugt und vorteilhaft ein optischer Sensor eingesetzt werden, der am Versorgungsrohr in der Nähe der Versorgungsöffnung mit Blickrichtung auf die Muschel befestigt ist. Auch solche Sensoren können zum Einsatz kommen, die auf anderen physikalischen Prinzipien basieren. Es ist kommerziell eine Reihe von Sensoren erhältlich, die geeignet sind.

Gemäß einer nächsten Ausführungsform der Erfindung ist bevorzugt und vorteilhaft vorgesehen, dass die Versorgungseinheit eine Versorgungsquelle und ein Peristaltikpumpe umfasst. Eine Peristaltikpumpe (oder Schlauchpumpe) ist eine Verdrängerpumpe, bei der das zu fördernde Medium durch äußere mechanische Verformung eines Schlauches durch diesen portionsweise hindurchgedrückt wird. Derartige Pumpen arbeiten sehr zuverlässig und sind gut erweiterbar, sodass eine Vielzahl von Versorgungsrohren kontinuierlich mit Versorgungsmaterial versorgt werden kann. In der Versorgungsquelle können beispielsweise Algen aufgezogen werden. Weiterhin kann bevorzugt und vorteilhaft vorgesehen sein, dass in der Versorgungsquelle eine Beleuchtungseinrichtung und/oder verschiedene weitere Sensoren vorgesehen sind. Über die Beleuchtungseinrichtung kann das Algenwachstum unterstützt werden. Wird den Muscheln eine Nahrungsergänzung oder ein Medikament zugeführt, kann es erforderlich sein, dass bestimmte Parameter in der Versorgungsquelle erfasst werden, um für optimale Bedingungen zu sorgen. Die Erfassung kann über die vorgesehenen Sensoren erfolgen, die beispielsweise die Temperatur oder den pH-Wert der Lösung messen.

Um eine gute Ausrichtung der Versorgungsöffnung des Versorgungsrohrs in Richtung auf den Einatemstrom der Muschel sicher gewährleisten zu können, wird bei der Erfindung eine Fixierungsvorrichtung für die Muscheln benutzt. Diese kann bevorzugt und vorteilhaft zumindest ein Haltegerüst oder einen Hälterungskasten umfassen, die die Wasserströmung nicht behindern und an oder in denen die Muschel fixierbar ist. Zu jeder in der Fixierungseinrichtung fixierten Muschel führt dann ein eigenes Versorgungsrohr bzw. zweigt ein eigenes Versorgungsrohr von einem übergeordneten Rohr ab. Ein Gerüst ist in der Regel gitterartig mit einer Vielzahl von einzelnen Ebenen aufgebaut und lässt eine gute Durchströmung mit Wasser zu. Aber auch jede andere Ausführung eines Gerüsts oder von strömungsdurchlässigen Halterungskästen ist möglich. Die Muscheln können sich selbst über ihren Fuß oder ihre Byssusfäden an dem Gerüst fixieren oder mit geeigneten Mitteln, beispielsweise mit einem elastischen Schnellkleber oder einem Gummiring, der das Öffnen der Muschel nicht behindert, daran fixiert werden. Oder sie werden einfach in einen Hälterungskasten eingesteckt (ohne spezielle Fixiervorrichtung wie Kleber oder Gummis), sodass sie ihre Lage nicht verändern können. Eine gute Wasserdurchströmung und eine enge Benachbarung der Muscheln zueinander erlaubt einen guten Transport von Gameten, sodass trotz der Fixierung der Muscheln eine Befruchtung und damit Vermehrung der Muscheln möglich ist.

Gemäß einer letzten Erfindungsausgestaltung kann eine computergestützte Steuerung des Dosierventils und der Versorgungseinheit vorgesehen sein. Alle Dosierventile und die Versorgungseinheit können insbesondere in Abhängigkeit von den Sensorsignalen von den einzelnen Muscheln gesteuert werden. Dadurch ist die Vorrichtung automatisierbar und kann autark arbeiten. Es kann ein vollautomatisches Dosiersystem für Muscheln zur Verfügung gestellt werden, bei dem die Dosierung, insbesondere von Futter, aber auch von Ergänzungsstoffen oder von Medikamenten, individuell für jede Muschel optimiert werden kann. Dadurch können die Ressourcen geschont und das Wasser von ungenutzten Versorgungsmaterialien freigehalten werden. Nähere Details hierzu und zu den oben beschriebenen Modifikationen der Erfindung sind den nachfolgenden Ausführungsbeispielen zu entnehmen.

### Ausführungsbeispiele

Die Vorrichtung zur Versorgung von Muscheln in einer Aquakultur nach der Erfindung und ihre vorteilhaften Modifikationen werden anhand der schematischen, nicht maßstäblichen **Figuren** zum besseren Verständnis nachfolgend noch weitergehend erläutert. Im Einzelnen zeigt die
- **Figur 1**: eine schematische Darstellung der Vorrichtung in einer Grundausführung und
- **Figur 2**: eine schematische Detail-Darstellung der Vorrichtung in einer vollautomatischen Ausführung.

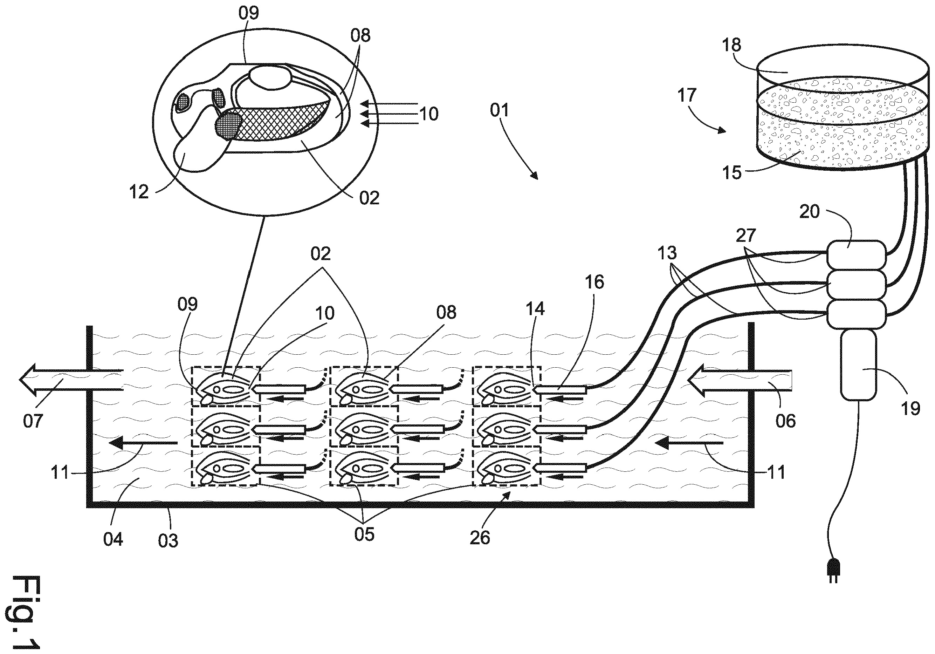

In der **Figur 1** ist eine Vorrichtung **01** zur Versorgung und Aufzucht von Muscheln **02** in einer landgestützten Aquakultur mit einem Wasserbecken **03** mit Wasser **04** gezeigt, in der die Muscheln **02** auf ihre Versorgung hin konditioniert oder aufgezogen (Nachzucht) werden. Die Muscheln **02** sind einzeln in einem Gerüst **05** als Fixierungsvorrichtung **26** mit mehreren gitterförmigen Spalten und Reihen fixiert, durch das das Wasser **04** gut hindurchströmen kann. Es fließt durch einen Zulauf **06** in das Wasserbecken **03** hinein und durch einen Ablauf **07** wieder aus diesem heraus, sodass eine Wasserströmung **11** im Wasserbecken **03** erzeugt wird. Die Aquakultur kann als geschlossenes Kreislaufsystem oder als offenes Durchlaufsystem konzipiert sein.

Der Einschub in **Figur 1** zeigt den Aufbau einer Muschel **02** mit zwei Schalenklappen **08** (*Bivalvia*). Diese sind über ein Ligament **09** miteinander verbunden. Ein Einatemstrom **10** wird von der Muschel **02** in die Kiemen eingesogen, dazu kann sich die Muschel **02** unter einem Öffnungswinkel öffnen. Die Muschel **02** kann über Filamente oder einen Fuß **12** zur Fixierung verfügen. Sie kann aber auch im Wasser frei schwimmen und dann mit einem externen Fixierungsmittel am Gerüst **05** fixiert werden.

Vor jeder Muschel **02** ist ein Versorgungsrohr **13** angeordnet. Jedes Versorgungsrohr **13** weist an seinem der Muschel **02** zugewandten Ende eine Versorgungsöffnung **14** auf, die in einem geringen Abstand vor der Muschel **02** im Bereich ihres Einatemstroms **10** angeordnet ist. Dabei werden die Schalenklappen **08** aber nicht berührt und damit auch nicht beeinträchtigt. Im gezeigten Ausführungsbeispiel ist die Versorgungsöffnung **14** ca. 10 mm vor der Muschel **02** angeordnet, es können aber auch in Abhängigkeit vor allem von der Muschelgröße, dem Einatemstrom **10** und der Wasserströmung **11** andere Abstände zwischen 5 mm und 50 mm eingestellt werden. Weiterhin ist die Versorgungsöffnung **14** nicht vor den Schalenklappen **08** oder dem Ligament **09** angeordnet, damit Versorgungsmaterial **15,** insbesondere Futter, aber auch Zusatzstoffe oder Medikamente, beim Öffnen der Muschel **02** auch direkt in das Innere der Muschel **02** gelangt (Pfeile für den Futterstrom) und nicht vom Ligament **09** abgelenkt wird. Die genaue Anordnung der Versorgungsöffnung **14** im Bereich des Einatemstroms **10** der Muschel **02** kann zusätzlich von der Geometrie der Fixierung der Muschel **02** im Gerüst **05** abhängen. Insbesondere ein symmetrischer Aufbau mit einer geraden Anordnung aller Versorgungsrohre **13** ist besonders günstig. Im gezeigten Ausführungsbeispiel ist die Versorgungsöffnung **14** die Öffnung einer Pipette **16** aus Kunststoff, die in das schlauchartig ausgebildete Versorgungsrohr **13** eingesteckt und damit als Teil davon anzusehen ist.

Alle Versorgungsrohre **13** sind mit einer von der Muschel **02** abgewandten Anschlussöffnung **27** mit einer Versorgungseinheit **17** verbunden (bei den Muscheln **02** in der linken und mittleren Reihe des Gerüsts **05** nur angedeutet), die eine Versorgungsquelle **18** und eine elektrische Peristaltikpumpe **19** umfasst. Mit der Peristaltikpumpe **19** kann Versorgungsmaterial **15,** insbesondere Futter in Form von Algen, an die Muscheln **02** abgegeben werden. Die Förderung erfolgt über den einzelnen Versorgungsrohren **13** zugeordnete Rotoren **20.** Dadurch kann jede Muschel **02** individuell versorgt werden. Über gemeinsame Rotoren **20** können auch Konvolute von Muscheln **02** oder alle Muscheln **02** gemeinsam versorgt werden.

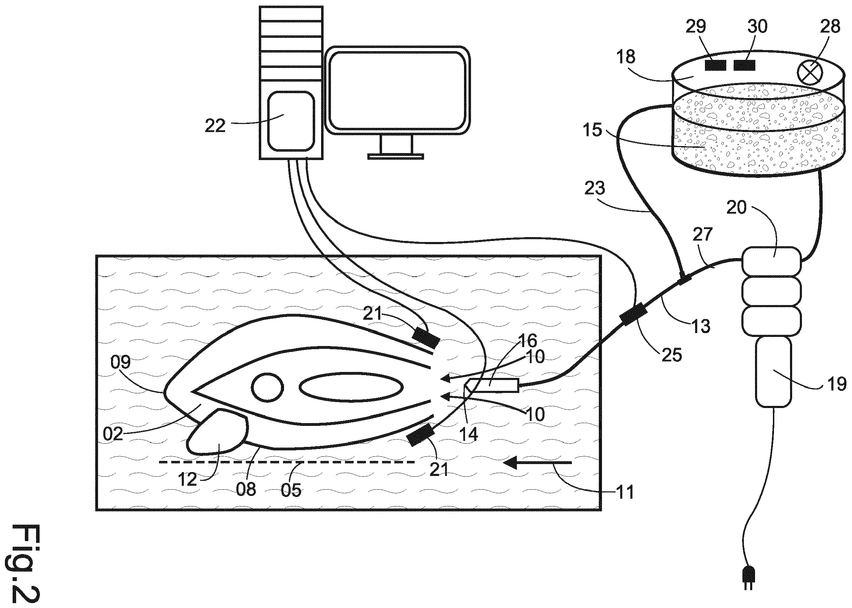

In der **Figur 2** ist ein Ausschnitt aus der Vorrichtung im Bereich einer Muschel **02** mit einer Sensorik zum Erkennen der geöffneten Muschel **02** dargestellt. Im gezeigten Ausführungsbeispiel sind an den Schalenklappen **08** gegenüber dem Ligament **09** Sensoren **21** befestigt, die beim Erzeugen eines Öffnungswinkels zwischen den Schalenklappen **08** Signale an eine computergestützte Steuerung **22** senden. Die Sensoren **21** können beispielsweise auf magnetischer oder optischer Signalerzeugung beruhen. Das Versorgungsrohr **13** verfügt über ein Rücklaufrohr **23** zur Versorgungsquelle **18.** Das Rücklaufrohr **23** ist über ein T-Stück **24** in das Versorgungsrohr **13** eingesetzt und gewährleistet einen Versorgungskreislauf. Dieser läuft dann, wenn ein Dosierventil **25** zwischen der Versorgungsöffnung **14** und dem Rücklaufrohr **23** in dem entsprechenden Zustand ist. Wenn das Dosierventil **25** über das Signal betätigt wird, wird Versorgungsmaterial **15** zur Muschel **02** geleitet. Die jeweils zugeleitete Dosis hängt dabei vor allem von der Größe der Muschel **02** und der Stärke ihres Einatemstroms **10** und der Wasserströmung **11** ab. Die Ansteuerung des Dosierventils **25** erfolgt in dieser Ausführungsform individuell über das Öffnungsverhalten der Muschel **02,** sodass eine vollautomatische Versorgung der Muscheln **02** mit einem hohen Ausnutzungsgrad des Versorgungsmaterials **15** erreicht werden kann. Das Dosierventil **25** kann auch mechanisch über die Schalenklappen **08** oder über Sensoren **21,** die gegenüber der Schalenklappen **08** angeordnet sind und diese nicht berühren, betätigt werden.

In der Versorgungsquelle **18** sind im gezeigten Ausführungsbeispiel noch eine Beleuchtungsvorrichtung **28** und verschiedene Sensoren **29, 30** vorgesehen. Über die Beleuchtungsvorrichtung **28** kann das Versorgungsmaterial **15,** insbesondere Futter in Form von Algen, mit Licht bestrahlt und in seinem Wachstum unterstützt werden. Licht kann im Übrigen auch über transparente Versorgungsrohre **13** (Schläuche) an die Algen gelangen. Sollen bestimmte Bedingungen in der Versorgungsquelle **18** eingestellt werden, können die über die Sensoren **29** (z.B. Temperatur) und **30** (z.B. pH-Wert) kontrolliert werden.

### Bezugszeichenliste

- **01**: Vorrichtung
- **02**: Muschel
- **03**: Wasserbecken
- **04**: Wasser
- **05**: Gerüst
- **06**: Zulauf
- **07**: Ablauf
- **08**: Schalenklappe
- **09**: Ligament
- **10**: Einatemstrom
- **11**: Wasserströmung in 03
- **12**: Filament, Fuß
- **13**: Versorgungsrohr
- **14**: Versorgungsöffnung
- **15**: Versorgungsmaterial
- **16**: Pipette
- **17**: Versorgungseinheit
- **18**: Versorgungsquelle
- **19**: Peristaltikpumpe
- **20**: Rotor
- **21**: Sensor (Öffnungswinkel 02)
- **22**: computergestützte Steuerung
- **23**: Rücklaufrohr
- **24**: T-Stück
- **25**: Dosierventil
- **26**: Fixierungsvorrichtung
- **27**: Anschlussöffnung
- **28**: Beleuchtungsvorrichtung
- **29**: Sensor (Temperatur 15)
- **30**: Sensor (pH-Wert 15)

## Patentansprüche

1. Vorrichtung (01) zur Versorgung von zumindest einer Muschel (02) in einer Aquakultur mit einer Wasserströmung (11), wobei die Muschel (02) zwei unter einem Öffnungswinkel öffenbare Schalenklappen (08) aufweist und einen Einatemstrom (10) erzeugt, mit einer Fixierungsvorrichtung (26) und einem Versorgungsrohr (13) für jede einzelne Muschel (02), wobei das Versorgungsrohr (13) eine der Muschel (02) zugewandte Versorgungsöffnung (14) und eine abgewandte Anschlussöffnung (27), welche mit einer Versorgungseinheit (17) zur Bereitstellung von Versorgungsmaterial (15) verbunden ist, aufweist,
**dadurch gekennzeichnet, dass**
die Versorgungsöffnung (14) des Versorgungsrohrs (13) mit einem Abstand zwischen 5 mm und 100 mm vor der Muschel (02) im Bereich des Einatemstroms (10) angeordnet ist, wobei der Abstand der Versorgungsöffnung (14) zur Muschel (2) abhängig ist von der Größe der Muschel, der Stärke des Einatemstroms (10) und der Wasserströmung (11).

2. Vorrichtung (01) nach Anspruch 1,
**dadurch gekennzeichnet, dass**
die Versorgungsöffnung (14) mit einem Abstand von 50 mm oder 75 mm vor der Muschel (02) angeordnet ist.

3. Vorrichtung (01) nach Anspruch 1 oder 2,
**dadurch gekennzeichnet, dass**
die Versorgungsöffnung (14) von der Öffnung einer Pipette (16) aus Kunststoff oder Glas gebildet ist, die in das Versorgungsrohr (13) eingesteckt ist.

4. Vorrichtung (01) nach einem der vorangehenden Ansprüche,
**dadurch gekennzeichnet, dass**
das Versorgungsrohr (13) ein Rücklaufrohr (23) zur Versorgungseinheit (17) aufweist.

5. Vorrichtung (01) nach Anspruch 4,
**dadurch gekennzeichnet, dass**
das Versorgungsrohr (13) ein Dosierventil (25) zwischen der Versorgungsöffnung (14) und dem Rücklaufrohr (23) aufweist, wobei die Dosierung in Abhängigkeit von der Größe der Muschel (02), vom Abstand der Versorgungsöffnung (14) von der Muschel (02), vom Öffnungswinkel zwischen den Schalenklappen (08), von der Stärke des Einatemstroms (10) und der Wasserströmung (11) und/oder von der Art des Versorgungsmaterials (15) zwischen einer maximalen Dosis und einer minimalen Dosis (Anspruch 6 ursprünglich) einstellbar ist.

6. Vorrichtung (01) nach Anspruch 5,
**dadurch gekennzeichnet, dass**
das Dosierventil (25) mit einer Schalenklappe (08) der Muschel (02) verbindbar und in Abhängigkeit vom Öffnungswinkel der Muschel (02) betätigbar ist.

7. Vorrichtung (01) nach Anspruch 5 oder 6,
**dadurch gekennzeichnet, dass**
zumindest ein Sensor (21) umfasst ist, der an zumindest einer Schalenklappe (08) zur Detektion des Öffnungswinkels der Muschel (02) anordenbar ist, wobei dabei vom Sensor (021) ein Signal zur Betätigung des Dosierventils (25) erzeugbar ist.

8. Vorrichtung (01) nach Anspruch 5 oder 6,
**dadurch gekennzeichnet, dass**
ein berührungsfreier Sensor (21) zur Detektion des Öffnungswinkels der Muschel (02) angeordnet ist, wobei dabei vom Sensor (21) ein Signal zur Betätigung des Dosierventils (25) erzeugt wird.

9. Vorrichtung (01) nach Anspruch 7 oder 8,
**dadurch gekennzeichnet, dass**
ein optischer oder magnetischer Sensor (21) eingesetzt wird.

10. Vorrichtung (01) nach einem der vorangehenden Ansprüche,
**dadurch gekennzeichnet, dass**
die Versorgungseinheit (17) eine Versorgungsquelle (18) und eine Peristaltikpumpe (19) umfasst.

11. Vorrichtung (01) nach Anspruch 10,
**dadurch gekennzeichnet, dass**
in der Versorgungsquelle (18) eine Beleuchtungseinrichtung (28) und oder verschiedene weitere Sensoren (29,30) vorgesehen sind.

12. Vorrichtung (01) nach einem der vorangehenden Ansprüche,
**dadurch gekennzeichnet, dass**
die Fixierungseinrichtung (26) zumindest ein Haltegerüst (05) oder einen Hälterungskasten umfasst, die die Wasserströmung (11) nicht behindern und an oder in denen die Muschel (02) fixierbar ist.

13. Vorrichtung (01) nach einem der vorangehenden Ansprüche,
**dadurch gekennzeichnet, dass**
eine computergestützte Steuerung (22) des Dosierventils (25) und der Versorgungseinheit (17) vorgesehen ist.

## Claims

1. A device (01) for feeding at least one mussel (02) in an aquaculture with a water flow (11), wherein the mussel (02) has two valves (08) that can be opened by an aperture angle and generates an inspiratory flow (10), with a fixing device (26) and a feed tube (13) for each individual mussel (02), wherein the feed tube (13) has a feed opening (14) that faces the mussel (02) and a connection opening (27) that faces away from the mussel and is connected to a feed unit (17) for making available feed material (15),
**characterized in that**
the feed opening (14) of the feed tube (13) is arranged in the region of the inspiratory flow (10) at a distance between 5 mm and 100 mm in front of the mussel (02), wherein the distance of the feed opening (14) from the mussel (2) is dependent on the size of the mussel, the intensity of the inspiratory flow (10) and the water flow (11) .

2. The device (01) according to claim 1,
**characterized in that**
the feed opening (14) is arranged at a distance of 50 mm or 75 mm in front of the mussel (02).

3. The device (01) according to claim 1 or 2,
**characterized in that**
the feed opening (14) is formed by the opening of a pipette (16) of plastic or glass, which is inserted into the feed tube (13).

4. The device (01) according to one of the preceding claims,
**characterized in that**
the feed tube (13) has a return tube (23) to the feed unit (17).

5. The device (01) according to claim 4,
**characterized in that**
the feed tube (13) has a dosing valve (25) between the feed opening (14) and the return tube (23), wherein the dosage can be adjusted between a maximum dose and a minimum dose (originally claim 6) in dependence on the size of the mussel (02), the distance of the feed opening (14) from the mussel (02), the aperture angle between the valves (08), the intensity of the inspiratory flow (10) and the water flow (11) and/or the type of feed material (15).

6. The device (01) according to claim 5,
**characterized in that**
the dosing valve (25) can be connected to a valve (08) of the mussel (02) and actuated in dependence on the aperture angle of the mussel (02).

7. The device (01) according to claim 5 or 6,
**characterized in that**
it comprises at least one sensor (21), which can be arranged on at least one valve (08) in order to detect the aperture angle of the mussel (02), wherein the sensor (21) can generate a signal for actuating the dosing valve (25).

8. The device (01) according to claim 5 or 6,
**characterized in that**
a contactless sensor (21) is provided for detecting the aperture angle of the mussel (02), wherein the sensor (21) generates a signal for actuating the dosing valve (25).

9. The device (01) according to claim 7 or 8,
**characterized in that**
an optical or magnetic sensor (21) is used.

10. The device (01) according to one of the preceding claims,
**characterized in that**
the feed unit (17) comprises a feed source (18) and a peristaltic pump (19).

11. The device (01) according to claim 10,
**characterized in that**
an illuminating device (28) and/or different additional sensors (29, 30) are provided in the feed source (18).

12. The device (01) according to one of the preceding claims,
**characterized in that**
the fixing device (26) comprises at least one holding frame (05) or one holding box, which do not impair the water flow (11) and on or in which the mussel (02) can be fixed.

13. The device (01) according to one of the preceding claims,
**characterized in that**
a computer-assisted control (22) of the dosing valve (25) and the feed unit (17) is provided.

## Revendications

1. Dispositif (01), destiné à approvisionner au moins une moule (02) dans une aquaculture avec un courant d'eau (11), la moule (02) comportant deux valves de coquille (08) susceptibles de s'ouvrir sous un angle d'ouverture et générant un flux inspiratoire (10), pourvu d'un dispositif de fixation (26) et d'un tube d'approvisionnement (13) pour chaque moule (02) individuelle, le tube d'approvisionnement (13) comportant un orifice d'approvisionnement (14) faisant face à la moule (02) et un orifice de raccordement (27) opposé, lequel est relié sur une unité d'approvisionnement (17) pour la mise à disposition de matière d'approvisionnement (15),
**caractérisé en ce que**
l'orifice d'approvisionnement (14) du tube d'approvisionnement (13) est placé avec un écart compris entre 5 mm et 100 mm à l'avant de la moule (02), dans la zone du flux inspiratoire (10), l'écart entre l'orifice d'approvisionnement (14) et la moule (2) dépendant de la taille de la moule, de la force du flux inspiratoire (10) et du courant d'eau (11).

2. Dispositif (01) selon la revendication 1,
**caractérisé en ce que**
l'orifice d'approvisionnement (14) est placé avec un écart de 50 mm ou 75 mm à l'avant de la moule (02) .

3. Dispositif (01) selon la revendication 1 ou 2,
**caractérisé en ce que**
l'orifice d'approvisionnement (14) est constitué par l'orifice d'une pipette (16) en matière plastique ou en verre, qui est inséré dans le tube d'approvisionnement (13).

4. Dispositif (01) selon l'une quelconque des revendications précédentes,
**caractérisé en ce que**
le tube d'approvisionnement (13) comporte un tube de retour (23) vers l'unité d'approvisionnement (17) .

5. Dispositif (01) selon la revendication 4,
**caractérisé en ce que**
le tube d'approvisionnement (13) comporte une soupape doseuse (25) entre l'orifice d'approvisionnement (14) et le tube de retour (23), le dosage étant réglable en fonction de la taille de la moule (02), de l'écart entre l'orifice d'approvisionnement (14) et la moule (02), de l'angle d'ouverture entre les valves de coquille (08), de la force du flux inspiratoire (10) et du courant d'eau (11) et / ou du type de la matière d'approvisionnement (15) entre une dose maximale et une dose minimale (initialement la revendication 6).

6. Dispositif (01) selon la revendication 5,
**caractérisé en ce que**
la soupape doseuse (25) est susceptible d'être reliée avec une valve de coquille (08) de la moule (02) et est actionnable en fonction de l'angle d'ouverture de la moule (02).

7. Dispositif (01) selon la revendication 5 ou 6,
**caractérisé en ce**
**qu'**il est compris au moins un capteur (21), qui est susceptible d'être placé sur au moins une valve de coquille (08), pour détecter l'angle d'ouverture de la moule (02), à cet effet un signal destiné à actionner la soupape doseuse (25) pouvant être généré par le capteur (21).

8. Dispositif (01) selon la revendication 5 ou 6,
**caractérisé en ce**
**qu'**un capteur (21) sans contact est placé pour la détection de l'angle d'ouverture de la moule (02), à cet effet, un signal destiné à actionner la soupape doseuse (25) étant généré par le capteur (21) .

9. Dispositif (01) selon la revendication 7 ou 8,
**caractérisé en ce**
**qu'**un capteur (21) optique ou magnétique est mis en œuvre.

10. Dispositif (01) selon l'une quelconque des revendications précédentes,
**caractérisé en ce que**
l'unité d'approvisionnement (17) comprend une source d'approvisionnement (18) et une pompe péristaltique (19).

11. Dispositif (01) selon la revendication 10,
**caractérisé en ce que**
dans la source d'approvisionnement (18) sont prévus un système d'éclairage (28) et / ou différents capteurs (29, 30) supplémentaires.

12. Dispositif (01) selon l'une quelconque des revendications précédentes,
**caractérisé en ce que**
le système de fixation (26) comprend au moins un châssis de support (05) ou un caisson de support, qui n'entravent par le courant d'eau (11) et / ou dans lesquels la moule (02) peut être fixée.

13. Dispositif (01) selon l'une quelconque des revendications précédentes,
**caractérisé en ce**
**qu'**un système de commande (22) assisté par ordinateur de la soupape de dosage (25) et de l'unité d'approvisionnement (17) est prévu.
